Europäisches Patentamt

European Patent Office

Office européen des brevets

(19)

(11) Veröffentlichungsnummer: **0 105 099**
**B1**

(12) # EUROPÄISCHE PATENTSCHRIFT

(45) Veröffentlichungstag der Patentschrift:
29.01.86

(51) Int. Cl.⁴: **B 42 D 15/02,** G 06 K 7/10

(21) Anmeldenummer: 83106664.2

(22) Anmeldetag: 07.07.83

(54) **Dokument mit einem beugungsoptischen Sicherheitselement.**

(30) Priorität: 04.10.82 CH 5820/82

(43) Veröffentlichungstag der Anmeldung:
11.04.84 Patentblatt 84/15

(45) Bekanntmachung des Hinweises auf die Patenterteilung:
29.01.86 Patentblatt 86/5

(84) Benannte Vertragsstaaten:
AT DE FR GB IT NL

(56) Entgegenhaltungen:
FR - A - 2 321 155
FR - A - 2 321 158
US - A - 4 094 575

(73) Patentinhaber: LGZ LANDIS & GYR ZUG AG,
CH-6301 Zug (CH)

(72) Erfinder: Antes, Gregor, Moussonstrasse 14,
CH-8044 Zürich (CH)

ACTORUM AG

## Beschreibung

Die Erfindung bezieht sich auf ein Dokument mit einem beugungsoptischen Sicherheitselement der im Oberbegriff des Anspruchs 1 genannten Art sowie auf ein Verfahren zur Herstellung des Dokumentes.

An unkonventionelle beugungsoptische Sicherheitselemente, die ein visuell nachprüfbares Echtheitsmerkmal darstellen und bei Dokumenten, wie z.B. Banknoten, Schecks, Identitätskarten u. dgl. Verwendung finden, werden unter anderem folgende Forderungen gestellt:

1. Sie sollen unter verschiedensten im täglichen Gebrauch auftretenden Beleuchtungs- und Betrachtungsbedingungen einen wohldefinierten, augenfälligen optischen Effekt zeigen.
2. Eine wirtschaftliche Massenfertigung soll möglich sein. Dabei soll aber ein grosser Aufwand an Investitionen und Know-how erforderlich sein.
3. Sie sollen keine direkte Ähnlichkeit mit bekannten beugungsoptischen Mustern aufweisen.
4. Sie sollen nicht aus kommerziell erhältlichen beugungsoptischen Mustern herstellbar oder simulierbar sein.
5. Sie sollen vielfältige Variationsmöglichkeiten bieten, so dass sie in zahlreichen Varianten spezifisch für verschiedene Dokumentenarten, Währungen und Werte eingesetzt werden können.
6. Sie sollen eine ausreichende Beständigkeit gegen Zerknitterung des Substrats besitzen.

Es ist ein Dokument der im Oberbegriff des Anspruchs 1 genannten Art bekannt (CH-PS 594 936), das ein beugungsoptisches Sicherheitselement in Form eines Phasenbeugungsgitters oder Phasenhologramms aufweist. Charakteristisch für solche Beugungsstrukturen ist, dass bereits eine kleine Änderung der Beobachtungs- oder Beleuchtungsrichtung eine grosse Änderung der reflektierten Farbe hervorruft. Beispielsweise ergibt ein Beugungsgitter mit einer Spatialfrequenz von 1000 Linien/mm bei senkrechter Beobachtungsrichtung und einem Lichteinfallswinkel von 30° einen grünen Farbeffekt und bei einem Lichteinfallswinkel von 41° einen roten Farbeffekt. In der Praxis erfolgt die Beleuchtung des Dokumentes oft durch ausgedehnte Lichtquellen, z.B. durch die Raumbeleuchtung mit mehreren Lampen oder durch Tageslicht, das durch ein Fenster einstrahlt, so dass an der Beugungsstruktur durch Überlagerung verschiedener Spektralbereiche und Beugungsordnungen nahezu beliebige Mischfarbenmuster entstehen, die nur schwer definierbar sind und sich auch nicht in einfach zu beschreibender Weise verändern, wenn die Beleuchtungs- oder Beobachtungsrichtung beispielsweise durch Kippen des Dokumentes verändert wird. Ist das Substrat des Dokumentes nicht vollständig eben, sondern weist z.B. durch Zerknitterung entstandene Oberflächenfacetten mit unterschiedlichen, unbestimmten Neigungswinkeln auf, so ergeben sich schon bei statischer Betrachtung der Beugungsstruktur undefinierbare Farbeffekte. Die Forderungen 1 bis 6 werden daher nicht oder zumindest nicht in befriedigender Weise erfüllt.

Es ist auch bekannt (DE-OS 1646 242), als Beugunsstruktur ein Muster konzentrischer Kreise oder ein kompliziertes, beliebige Lichtbeugungsfiguren hervorrufendes Beugungsmuster zu verwenden. Hierbei ergeben sich ebenfalls die oben erwähnten Unzulänglichkeiten.

Ferner ist ein Dokument mit einem Sicherheitselement bekannt (DE-OS 32 06062), dessen Beugungsstruktur aus einem ersten Beugungsgitterbereich in Form eines Kreises und aus einem zweiten Beugungsgitterbereich in Form eines Rechtecks besteht, wobei das Rechteck den Kreis umschliesst. Ein Betrachter sieht die beiden Bereiche in kontrastierenden Farben bzw. Farbspektra in Abhängigkeit von den jeweiligen Beleuchtungs- und Beobachtungsrichtungen. Auch dieses Dokument erfüllt die Bedingungen 1 bis 6 nur unzureichend.

Schliesslich ist ein Reliefmuster für dekorative Zwecke bekannt (US-PS 1 996 539), das aus einer Vielzahl einzelner Musterelemente besteht, wobei die Orientierung der Musterelemente entlang eines Bandes progressiv variiert. Der Linienabstand des Reliefmusters liegt in der Grössenordnung von $\frac{1}{50}$ mm bis 1 mm, so dass die Bildung von Beugungsfarbeffekten ausdrücklich vermieden wird. Auch solche Reliefmuster sind nicht geeignet, als Sicherheitselemente bei Dokumenten eingesetzt zu werden, weil sie die Forderungen 1 bis 6 nicht erfüllen.

Der Erfindung liegt die Aufgabe zugrunde, ein Dokument mit einem beugungsoptischen Sicherheitselement der im Oberbegriff des Anspruchs 1 genannten Art zu schaffen, das allen Forderungen 1 bis 6 gerecht wird.

Die Lösung dieser Aufgabe gelingt durch die im Kennzeichen des Anspruchs 1 angegebenen Merkmale.

Nachfolgend werden einige Ausführungsbeispiele der Erfindung anhand der Zeichnung näher erläutert.

Es zeigen:

Fig. 1 ein Dokument
Fig. 2 ein Sicherheitselement
Fig. 3 je eine Darstellung von Beugungsricht-
und 4 ungen im Halbraum
Fig. 5 weitere Sicherheitselemente und
6 und
Fig. 7 eine holographische Belichtungseinrichtung zur Erzeugung einer Beugungsstruktur

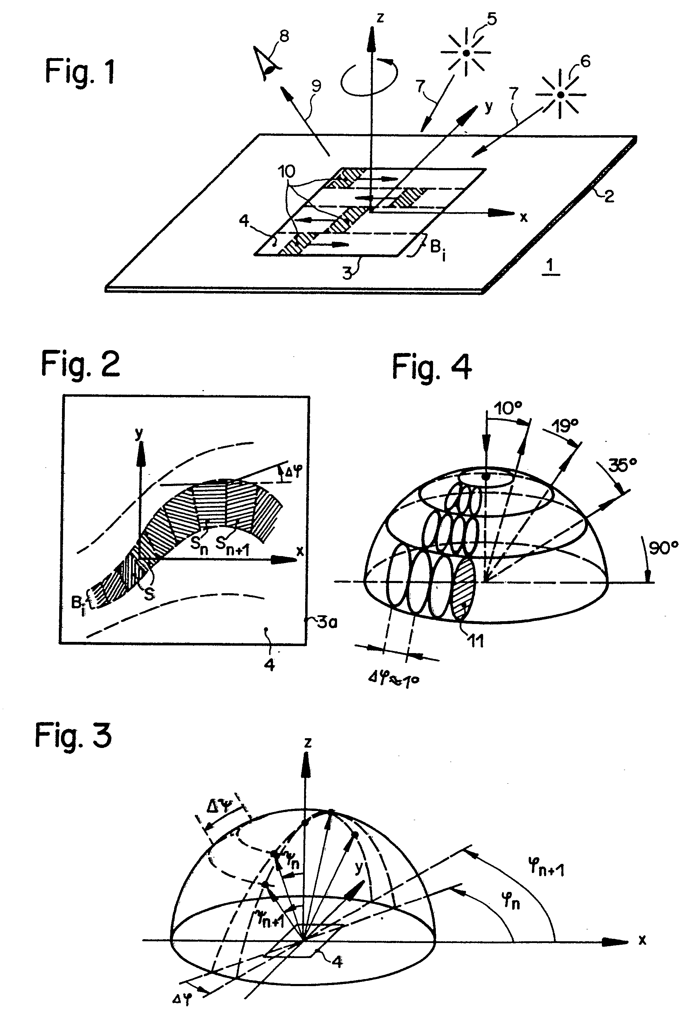

In der Fig. 1 bedeudet 1 ein Dokument, das beispielsweise eine Banknote, ein Scheck, eine Identitätskarte usw. sein kann und aus einem Substrat 2 aus Papier, Karton oder Kunststoff sowie aus einem beugungsoptischen Sicherheitselement 3 besteht. Das Sicherheitselement 3 belegt wenigstens einen Teil der Substratoberfläche und besitzt eine Beugungsstruktur 4. Diese Beugungsstruktur 4 wird vorteilhaft durch Einprägen eines Phasenbeugungs-Reliefmusters in das Substrat 2 bzw. in eine dünne, mit einer metallischen Reflexionsschicht versehene Kunststoffschicht des Substrats 2 erzeugt. Als Beugungsstruktur 4 kann aber auch ein im Durchlicht oder in Reflexion zu betrachtendes Amplitudenhologramm dienen. Verfahren zur Erzeugung von Beugungsstrukturen in einem Dokument sind bekannt und werden daher hier nicht näher erläutert. Im dargestellten Beispiel stellt die Beugungsstruktur 4 ein Reflexion-Phasenhologramm dar.

Bei der visuellen Echtheitsprüfung des Dokumentes 1 wird dessen Sicherheitselement 3 in polychromatischem Licht betrachtet. In der Fig. 1 sind zwei Lichtquellen 5, 6 angedeutet, die das Dokument 1 in beliebigen, festen Beleuchtungsrichtungen 7 beleuchten. Das Auge eines Beobachters 8 sieht das Sicherheitselement 3 in einer ebenfalls beliebigen, festen Beobachtungsrichtung 9. Die Beugungsstruktur 4 erzeugt durch Beugung des einfallenden Lichtes ein oder mehrere Farbmuster 10, die in der Fig. 1 durch schraffierte Rechtecke angedeutet sind und ein visuell nachprüfbares Echtheitsmerkmal darstellen: die örtliche Lage und die charakteristischen Eigenschaften dieser Farbmuster 10 hängen stark von der zufälligen Beleuchtungs- und Beobachtungsrichtung 7 bzw. 9 ab; die Farbmuster 10 sind also keineswegs definiert und der eigentliche Echtheitsgehalt liegt im Gegensatz zum Stand der Technik nicht darin, dass sich unter definierten Beleuchtungs- und Beobachtungsbedingungen ein bestimmtes Farbmuster oder ein bestimmter Farbumschlag ergibt. Vielmehr besteht das Echtheitsmerkmal darin, dass sich das bei einer bestimmten Beleuchtungs- und Beobachtungsrichtung 7 bzw. 9 einstellende Farbmuster 10 bezüglich eines mit dem Substrat 2 fest verbundenen Koordinatensystems x, y mit lokal vorbestimmter Geschwindigkeit entlang einer vorbestimmten Bahn Bᵢ bewegt, wenn das Substrat 2 in seiner Ebene in einem bestimmten Drehsinn und mit einer bestimmten Geschwindigkeit um eine zur Substratebene senkrechte und ungefähr durch die Mitte des Sicherheitselementes 3 laufende Achse gedreht wird, sofern die Beleuchtungs- und Beobachtungsrichtung 7 bzw. 9 bezüglich eines ortsfesten Koordinatensystems nicht verändert werden. Die beispielsweisen Bewegungsrichtungen der Farbmuster 10 sind in der Fig. 1 durch Pfeile angedeutet.

Die jeweils vom Beobachter 8 wahrgenommenen Farbmuster 10 sind zwar durch die besondere Art der Beugungsstruktur 4 und ausserdem durch die Beobachtungsrichtung 9 und die Beleuchtungsgeometrie bestimmt. Hingegen stehen die Bewegungsrichtung und die Bewegungsgeschwindigkeit der Farbmuster 10 innerhalb der Bewegungsbahnen Bᵢ in vorbestimmter Relation zur Drehrichtung sowie zur Drehgeschwindigkeit und sind weitgehend unabhängig von den schwer festzulegenden jeweiligen Beobachtungs- und Beleuchtungsbedingungen. Die Bewegung der Farbenmuster 10 entlang der Bewegungsbahnen Bᵢ stellt somit einen unter den verschiedensten Beleuchtungs- und Beobachtungsbedingungen und auch bei nicht völlig glattem Substrat 2 auftretenden, wohldefinierten optischen Effekt dar, der auch für den Laien augenfällig ist und leicht nachgeprüft werden kann.

Für die graphische Form der Bewegungsbahnen Bᵢ bieten sich zahlreiche Möglichkeiten an. Die Bewegungsbahnen Bᵢ können geradlinig, kreisförmig, ringförmig oder unregelmässig sein. Ihre Breite kann konstant oder veränderlich sein. Ferner können die Bewegungsbahnen Bᵢ kontinuierlich, d.h. zusammenhängend, oder diskontinuierlich sein. Die lokale Geschwindigkeitsverteilung der bewegten Farbmuster 10 relativ zur Drehgeschwindigkeit des Substrates 2 kann variiert werden. Je nach der besonderen Art der Beugungsstruktur 4 kann die Bewegung der Farbmuster 10 innerhalb der Bewegungsbahnen Bᵢ kontinuierlich, quasikontinuierlich oder sprungweise sein, wobei sich die z.B. in einer ringförmigen Bewegungsbahn angeordneten Farbmuster 10 z.B. schneller oder langsamer drehen können, als das Substrat 2 in seiner Ebene gedreht wird, und wobei die Drehung der Farbmuster 10 im Vergleich zur Drehung des Substrates 2 im gleichen oder in entgegengesetztem Drehsinn erfolgen kann.

Allerdings soll hier der Fall ausgeschlossen werden, dass sich das Farbmuster 10 in einer kreisförmigen Bewegungsbahn im Vergleich zur Drehung des Substrates 2 kontinuierlich mit gleicher Geschwindigkeit, aber entgegengesetztem Drehsinn dreht. Dies würde nämlich bedeuten, dass sich das Farbmuster 10 zwar bezüglich des Koordinatensystems x, y dreht, gegenüber einem ortsfesten Koordinatensystem jedoch nicht bewegt, was mit einer aus konzentrischen Ringen bestehenden Beugungsstruktur realisiert werden könnte, so dass die Bedingungen 2 bis 5 nicht erfüllt wären.

Anhand der Fig. 2 und 3 wird das Verständnis der Erfindung weiter vertieft. Die Fig. 2 zeigt ein Sicherheitselement 3a mit einer als Bewegungsbahn Bᵢ bezeichneten Teilfläche. Die Beugungsstruktur 4 besteht aus einer Vielzahl einzelner Strukturelemente S, die innerhalb der durch die Bewegungsbahn Bᵢ belegten Fläche lückenlos aneinandergereiht sind. Die Beugungseigenschaften der Strukturelemente S sind dadurch charakterisiert, dass z.B. senkrecht auf das Strukturelement $S_n$ einfallendes sichtbares Licht der Wellenlänge $\lambda$ gemäss der Fig. 3 in die Richtung $\varphi_n, \psi_n$ sowie in die Richtung $\varphi_n + 180°, \psi_n$ (konjugierte Beugungsordnung) gebeugt würde, während das benachbarte Strukturelement $S_{n+1}$ das einfallende Licht in die Richtung $\varphi_{n+1}, \psi_{n+1}$ sowie in die Richtung $\varphi_{n+1} + 180°, \psi_{n+1}$ ablenken würde. Dabei ist die Winkeldifferenz $\Delta\varphi$ durch die unterschiedliche Orientierung der Strukturelemente $S_n$ und $S_{n+1}$ und die Winkeldifferenz $\Delta\psi$ durch die unterschiedliche Spatialfrequenz dieser beiden Strukturelemente gegeben.

Wird umgekehrt die Beugungsstruktur 4 z.B. aus einer der Richtung $\varphi_n, \psi_n$ entgegengesetzten Beleuchtungsrichtung mit weissem Licht angestrahlt, so scheint dem in senkrechter Richtung (Achse z in der Fig. 3) beobachtenden Auge das Strukturelement $S_n$ zu leuchten, und zwar infolge der spektralen Dispersion der Beugungsstruktur 4 in einer der Wellenlänge $\lambda$ entsprechenden Farbe.

Liegen nun die Beugungsrichtungen verschiedener Strukturelemente S der Bewegungsbahn $B_i$ winkelmässig genügend dicht beieinander und erfüllen den gesamten Halbraum so ergeben sich diese Farbeffekte für beliebige Beleuchtungsgeometrien, wobei im Falle mehrerer oder ausgedehnter Lichtquellen Mischfarben entstehen. Einzig im theoretischen Fall der volldiffusen Beleuchtung würde die Farbenmischung ein richtungsunabhängiges „Farbgemisch" ergeben, das sich visuell nicht mehr von einer konventionellen Körperfarbe unterscheiden liesse. Praktisch tritt dieser volldiffuse Beleuchtungsfall nicht ein, da selbst bei volldiffuser Beleuchtungsquelle (z.B. im Nebel) der Beobachter durch seine Körpersilhouette einen Teil des beleuchtenden Halbraums abdeckt, so dass eine beleuchtungsmässige Anisotropie und somit ein Farbeffekt entsteht.

Dreht man nun das Dokument mit dem Sicherheitselement 3a beispielsweise im Uhrzeigersinn um den Winkel $\Delta\varphi$, so erfüllt nun das angrenzende Strukturelement $S_{n+1}$ die Sichtbarkeitsbedingung des lokalen Farbeffektes und bei einer weiteren Drehung das Strukturelement $S_{n+2}$ usw., so dass sich eine quasikontinuierliche Bewegung eines bestimmten Farbmusters ergibt.

Es ist leicht einzusehen, dass der beschriebene Effekt gleichermassen auch bei schiefer Beobachtungsrichtung auftritt.

Im folgenden soll abgeschätzt werden, wie viele unterschiedliche Strukturelemente S in einer Bewegungsbahn $B_i$ erforderlich sind, wenn die Beugungsstruktur 4 solcher Art sein soll, dass in jedem beliebigen Beleuchtungsfall und bei jeder azimutalen Winkellage des Dokumentes 1 bei senkrechter Beobachtungsrichtung ein Farbeffekt sichtbar ist. Dabei wird angenommen, dass das Substrat 2 abgesehen von der mikroskopisch feinen Beugungsstruktur 4 glatt ist.

Je gerichteter die verwendete Beleuchtungsquelle ist, desto mehr Strukturelemente S mit unterschiedlichen Beugungsrichtungen sind notwendig, damit die Sichtbarkeitsbedingung für einen Farbeffekt unabhängig von der mittleren Beleuchtungsrichtung 7 (Fig. 1) und von der Lage des Dokumentes 1 erfüllt ist. Eine direkte Beleuchtung durch die Sonne stellt wohl den extremsten Fall gerichteter Beleuchtung dar, der in der Praxis im vorliegenden Zusammenhang berücksichtigt werden muss. Die dem scheinbaren Sonnendurchmesser entsprechende Winkelunschärfe beträgt etwa $\pm$ 0,25 Grad. Die Apertur des im Normalabstand beobachtenden Auges definiert einen zusätzlichen Winkelbereich von etwa $\pm$ 0,3 Grad. Daraus resultiert, dass ein Strukturelement S einer Bewegungsbahn $B_i$ auch dann noch einen Farbeffekt ergibt, wenn die mittlere Beleuchtungsrichtung 7 um etwa $\pm$ 0,55 Grad im Azimut von der Idealrichtung abweicht. Bezüglich des Einfallswinkels gegenüber der Flächennormalen z ergibt sich eine weit grössere Toleranz, da drei geeignet gewählte Spatialfrequenzen im Bereich von 455 bis 1430 Linien/mm genügen, um gemäss der Fig. 4 den gesamten in der Praxis bedeutsamen Einfallswinkelbereich von 10 Grad bis 90 Grad abzudecken. Einfallswinkel unterhalb von etwa 10 Grad sind zumindest bei senkrechter Beobachtungsrichtung ohnehin praktisch nicht realisierbar, da die Beobachtersilhouette die Lichtquelle abdecken würde.

Sind die Strukturelemente S beispielsweise Beugungsgitter, so überdecken Strukturelemente mit einer Gitterkonstanten von 0,7 µm (Spatialfrequenz 1430 Linien/mm) bei senkrechter Beobachtungsrichtung und bei Beleuchtung mit weissem Licht einen Einfallswinkelbereich von 90 Grad bis etwa 35 Grad, Strukturelemente mit einer Gitterkonstanten von 1,2 µm einen Bereich von etwa 19 bis 35 Grad und Strukturelemente mit einer Gitterkonstanten von 2,2 µm (Spatialfrequenz 455 Linien/mm) einen Bereich von etwa 10 bis 19 Grad.

Mit drei Spatialfrequenzen und einem je einem der Strukturelemente S zugeordneten Winkelbereich $\Delta\varphi$ von $\pm$ 0,55 Grad $\approx$ 1 Grad ergibt sich die in der Fig. 4 dargestellten Situation. In der Fig. 4 ist der Einfallswinkelbereich, der an einem Strukturelement S (Fig. 3) bei senkrechter Beobachtungsrichtung einen Farbeffekt ergibt, durch eine ellipsenförmige Fläche 11 angedeutet. Diese Flächen 11 überdecken im Bereich von 10 Grad bis 90 Grad die gesamte Einheits-Halbkugel. Berücksichtigt man zur Abschätzung der Anzahl n erforderlicher Strukturelemente S nur die plus-erste und die minus-erste Beugungsordnung, so kann nach der Gleichung

$$n_\psi = \frac{360}{2} \cdot \frac{\sin\psi_{max}}{\Delta\varphi}$$

für jede der drei Gruppen von Strukturelementen die Anzahl erforderlicher Strukturelemente berechnet werden, wobei $\psi_{max}$ den grössten Einfallswinkel — gegenüber der Flächennormalen gemessen — der jeweiligen Gruppe bedeutet. Unter den genannten Annahmen ergibt sich:

$$n_{90\text{-}35\,Grad} = 180$$
$$n_{35\text{-}19\,Grad} = 103$$
$$n_{19\text{-}10\,Grad} = \underline{59}$$
$$n \qquad = 442$$

Um eine gute Bewegungskontinuität des Farbmusters 10 zu erzielen, werden vorteilhaft mehr als drei Spatialfrequenzen oder sogar sogenannte Spatialfrequenzkontinua verwendet. Vorteilhaft werden dabei die Beugungsordnungen auf der Einheits-Halbkugel (Fig. 4) in Form einer Helix oder Doppelhelix angeordnet.

In der Praxis sind zur Erzeugung eines quasikontinuierlich bewegten Farbeffektes weit weniger als die vorstehend abgeschätzte Anzahl von 442 Strukturelementen erforderlich. Es ist nämlich zu berücksichtigen, dass das Substrat 2 in der Regel nicht ideal glatt ist, was zu einer Verbreiterung der Beugungsordnungen führt. Ferner bewirken in der Praxis auch die höheren Beugungsordnungen einen Farbeffekt. Schliesslich ist zu bedenken, dass bei beidäugiger Betrachtung ohnehin eine intraokulare Parallaxe von etwa 10 Grad auftritt. Versuche haben gezeigt, dass etwa 50 Strukturelemente mit gleichmässig verteilten Beugungsrichtungen ausreichen, um unter verschiedensten Beleuchtungsbedingungen einen gut sichtbaren, quasikontinuierlich bewegten Farbeffekt zu erzeugen.

Wird eine noch geringere Anzahl Strukturelemente S verwendet oder sind die Beugungsrichtungen der Strukturelemente S ungleichmässig verteilt, so ergibt sich bei der Rotation des Dokumentes 1 der Effekt von innerhalb der Bewegungsbahnen $B_i$ in wohldefinierter Reihenfolge blinkenden Oberflächenelementen.

Aufgrund der vorstehenden Erläuterungen ist leicht einzusehen, dass das beschriebene Sicherheitselement 3 bzw. 3a zahlreiche Variationsmöglichkeiten bietet. Die Beugungsstruktur 4 kann solcher Art sein, dass zumindest im Falle senkrechter Beobachtungsrichtung bei jeder beliebigen Beleuchtungsrichtung mindestens ein Farbmuster 10 entsteht. Vorteilhaft ist sie solcher Art, dass bei jeder beliebigen Beleuchtungs- und Beobachtungsrichtung 7 bzw. 9 wenigstens ein Farbmuster 10 sichtbar ist. Vorzugsweise variieren sowohl die Beugungsrichtungen, d.h. die beugungsoptische Orientierung der Beugungsstruktur 4, als auch ihre Spatialfrequenz entlang der Bewegungsbahn $B_i$ nach einer vorgegebenen Gesetzmässigkeit. Die Beugungsstruktur 4 kann aus einer Vielzahl aneinandergefügter diskreter Strukturelemente S unterschiedlicher beugungsoptischer Orientierung und bzw. oder unterschiedlicher Spatialfrequenz bestehen. Die beugungsoptische Orientierung und bzw. oder die Spatialfrequenz der Beugungsstruktur 4 kann aber auch entlang der Bewegungsbahn $B_i$ kontinuierlich variieren, so dass sich eine völlig kontinuierliche Bewegung der Farbmuster 10 ergibt.

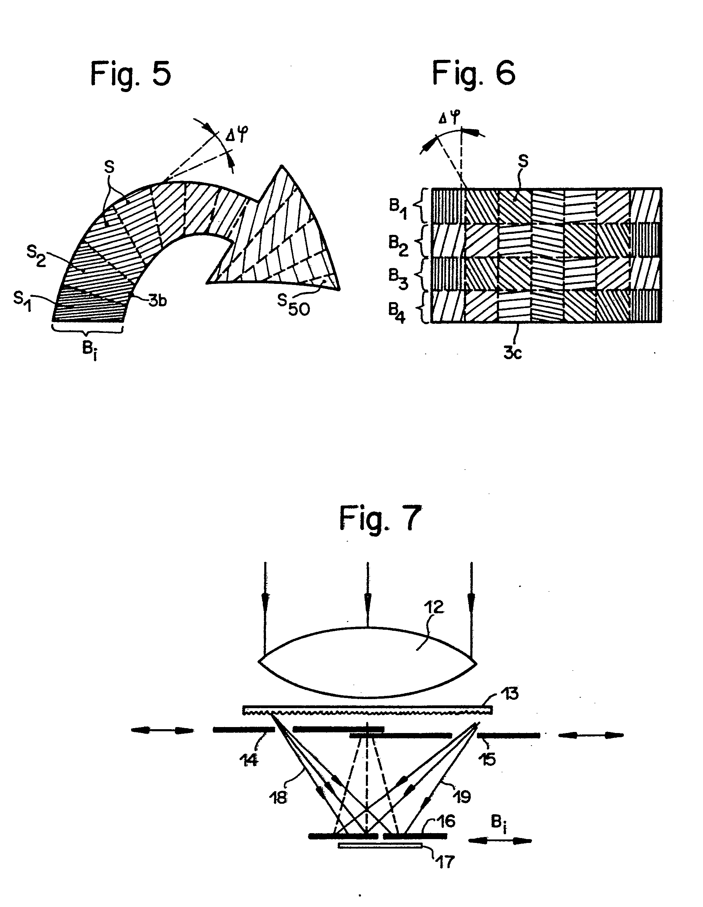

Die Fig. 5 zeigt ein Sicherheitselement 3b mit einer einzigen Bewegungsbahn $B_i$, welche die graphische Form eines halbkreisförmigen Pfeiles aufweist, wodurch sich der als Echtheitsmerkmal nachzuprüfende Effekt, nämlich die Bewegung eines Farbmusters entlang des Pfeiles, wenn das Dokument in Pfeilrichtung im Uhrzeigersinn gedreht wird, selbst erklärt. Als Strukturelemente S der Beugungsstruktur 4 dienen z.B. n = 50 verschiedene Beugungsgitter. Die Gitterkonstante des ersten Strukturelementes $S_1$ beträgt z.B. 2,2 mm und jene des letzten Strukturelementes $S_{50}$ z.B. 0,7 mm. Entlang des Pfeiles wird die Gitterkonstante von Strukturelement zu Strukturelement um den Betrag

$$\Delta d = \frac{2,2 - 0,7}{n}\,\mu m$$

kleiner. Ferner ist die Orientierung jedes Strukturelementes $S_n$ gegenüber dem vorangehenden Strukturelement $S_{n-1}$ im Gegenuhrzeigersinn um den Winkel

$$\Delta\varphi = \frac{180°}{n}$$

gedreht.

In der Fig. 6 ist ein Sicherheitselement 3c mit vier parallelen Bewegungsbahnen $B_1$ bis $B_4$ dargestellt. Die Beugungsstruktur der Bewegungsbahnen $B_1$ und $B_3$ besteht aus aneinandergereihten Strukturelementen S, deren Orientierung in der Zeichnung von links nach rechts jeweils um den Winkel $\Delta\varphi > 0$ ändert. Die Beugungsstruktur der Bewegungsbahnen $B_2$ und $B_4$ ist ähnlich, hingegen ändert die Orientierung der Strukturelemente S von links nach rechts um den Winkel $\Delta\varphi < 0$. Bei einer Rotation des Sicherheitselementes 3c bewegen sich die Farbmuster in benachbarten Bewegungsbahnen in entgegengesetzter Richtung. Ähnlich wie die Orientierung der Strukturelemente S kann auch ihre Spatialfrequenz in benachbarten Bewegungsbahnen gegenläufig variieren.

Die Strukturelemente S einer Bewegungsbahn $B_i$ der beschriebenen Sicherheitselemente 3, 3a, 3b und 3c können sehr klein gewählt und mit hoher Präzision aneinandergereiht werden, wenn zur Herstellung einer Original-Beugungsstruktur, die als Vorlage für eine Massen-Vervielfältigung dient, mit Hilfe einer „step-and-repeat"-Apparatur eine mikrolithographische Maskentechnik angewandt wird. Der hierzu erforderliche technische Aufwand ist derart gross, dass Fälschungen praktisch ausgeschlossen sind. Nachahmungen mittels des üblichen Instrumentariums der Holographie sind ebenfalls nicht möglich, wenn die Strukturelemente S genügend klein gewählt werden.

Die Fig. 7 zeigt eine Belichtungseinrichtung zur Erzeugung einer Original-Beugungsstruktur, die als Vorlage zur Massenherstellung von Sicherheitselementen 3 mit einer Beugungsstruktur 4 dient und eine völlig kontinuierliche Bewegung der Farbmuster 10 ergibt. Die Belichtungseinrichtung besteht aus einem nicht dargestellten Laser, einer grossformatigen Linse 12 mit grosser numerischer Apertur, einer Mattscheibe 13, zwei im Strahlengang unmittelbar hinter der Mattscheibe 13 angeordneten Lichtblenden 14, 15 und einer weiteren Lichtblende 16, die im Strahlengang hinter den Lichtblenden 14, 15 unmittelbar vor dem zu belichtenden lichtempfindlichen Substrat 17 liegt. Das z.B. aus Photoresist bestehende Substrat 17 ist im Vergleich zu den Abmessungen der Linse 12 klein. Die beispielsweise als runde Lochblenden ausgebildeten Lichtblenden 14 bis 16 sind motorisch verstellbar.

Vom Laser erzeugtes kohärentes Licht wird durch die Linse 12 derart umgelenkt, dass es, falls die Mattscheibe 13 nicht vorhanden wäre, auf einen Punkt des Substrates 17 fokussiert würde. Die Mattscheibe 13 garantiert eine gleichmässige Ausleuchtung der ganzen Fläche des Substrates 17. Nun wird aber der Strahlengang durch die Lichtblenden 14 bis 16 begrenzt. Die annähernd in der gleichen Ebene liegenden Lichtblenden 14, 15 begrenzen den Einfallswinkelbereich der im Bereich des Substrates 17 miteinander interferierenden Lichtbündel 18, 19. Die Interferenzstruktur und damit auch das auf dem Substrat 17 entstehende Hologramm enthalten somit je nach Grösse, azimutmässiger Orientierung und gegenseitigem Abstand der Lichtblenden 14, 15 einen wohldefinierten Spatialfrequenzbereich. Mindestens die azimutmässige Orientierung oder der gegenseitige Abstand der Lichtblenden 14, 15 ist verstellbar.

Die Lichtblende 16 begrenzt die momentan belichtete Teilfläche des Substrates 17 und ist in vorbestimmter Relation zur Bewegung der Lichtblenden 14, 15 in zwei Koordinaten relativ zum Substrat 17 kontinuierlich positionierbar.

Während der Belichtung wird die Lichtblende 16 den Bewegungsbahnen $B_i$ entlang kontinuierlich bewegt. Da der Laser, die Linse 12, die Mattscheibe 13 und das Substrat 17 relativ zueinander starr montiert sind, steht die Interferenzstruktur trotz der Bewegung der Lichtblende 16 still. Gleichzeitig werden die Lichtblenden 14, 15 gegeneinander bzw. auseinander bewegt oder in ihrer Orientierung um die optische Achse gedreht, so dass kontinuierlich neue Spatialfrequenzen erzeugt und bestehende Spatialfrequenzen ausgeblendet werden. Das Substrat 17 wird innerhalb der durch die Bewegung der Lichtblende 16 definierten Bewegungsbahn $B_i$ mit einem zusammenhängenden Interferenzmuster belichtet, dessen Spatialfrequenz entlang der Bewegungsbahn $B_i$ nach Betrag und Orientierung kontinuierlich variiert. Nach der Belichtung wird das Substrat 17 in üblicher Weise verarbeitet.

Eine Variante der Anordnung nach der Fig. 7 besteht darin, dass das eine der beiden miteinander interferierenden Strahlenbündel 18, 19 nicht durch die Mattscheibe 13 aufgefächert und durch die verstellbare Blende 15 variiert wird, sondern durch einen bei holographischen Aufzeichnungsverfahren üblichen Referenzstrahl mit feststehender Geometrie gebildet wird.

## Patentansprüche

1. Dokument mit einem Substrat und einem beugungsoptischen Sicherheitselement, das mindestens einen Teil der Substratoberfläche belegt und eine Beugungsstruktur aufweist, welche durch Beugung einfallenden Lichtes mindestens ein Farbmuster erzeugt, das ein visuell nachprüfbares Echtheitsmerkmal darstellt, dadurch gekennzeichnet, dass die Beugungsstruktur (4) solcher Art ist, dass sich das bei einer gegebenen Beleuchtungs- und Beobachtungsrichtung (7; 9) einstellende Farbmuster (10) bezüglich eines mit dem Substrat (2) fest verbundenen Koordinatensystems (x, y) mit lokal vorbestimmter Geschwindigkeit entlang einer vorbestimmten Bahn ($B_i$) bewegt, wenn das Substrat (2) in seiner Ebene in einem bestimmten Drehsinn und mit einer bestimmten Geschwindigkeit gedreht wird.

2. Dokument nach Anspruch 1, dadurch gekennzeichnet, dass die Beugungsstruktur (4) solcher Art ist, dass im Falle senkrechter Beobachtungsrichtung (9) bei jeder beliebigen Beleuchtungsrichtung (7) mindestens ein Farbmuster (10) entsteht.

3. Dokument nach Anspruch 1, dadurch gekennzeichnet, dass die Beugungsstruktur (4) solcher Art ist, dass bei jeder beliebigen Beleuchtungs- und Beobachtungsrichtung (7; 9) mindestens ein Farbmuster (10) entsteht.

4. Dokument nach Anspruch 1, dadurch gekennzeichnet, dass die beugungsoptische Orientierung der Beugungsstruktur (4) entlang der Bewegungsbahn ($B_i$) nach einer vorbestimmten Gesetzmässigkeit variiert.

5. Dokument nach Anspruch 1, dadurch gekennzeichnet, dass die Spatialfrequenz der Beugungsstruktur (4) entlang der Bewegungsbahn ($B_i$) nach einer vorbestimmten Gesetzmässigkeit variiert.

6. Dokument nach Anspruch 4 oder 5, dadurch gekennzeichnet, dass die Beugungsstruktur (4) aus einer Vielzahl aneinandergefügter Strukturelemente (S) unterschiedlicher beugungsoptischer Orientierung bzw. unterschiedlicher Spatialfrequenz besteht.

7. Dokument nach Anspruch 4 oder 5, dadurch gekennzeichnet, dass die beugungsoptische Orientierung bzw. die Spatialfrequenz der Beugungsstruktur (4) entlang der Bewegungsbahn ($B_i$) kontinuierlich variiert.

8. Dokument nach Anspruch 2, dadurch gekennzeichnet, dass die Beugungsstruktur (4) wenigstens drei verschiedene Spatialfrequenzen aufweist.

9. Dokument nach Anspruch 8, dadurch gekennzeichnet, dass die kleinste Spatialfrequenz wenigstens annähernd 460 Linien/mm und die grösste Spatialfrequenz wenigstens annähernd 1400 Linien/mm beträgt.

10. Dokument nach Anspruch 6 und 8, dadurch gekennzeichnet, dass die Strukturelemente (S) Beugungsgitter sind und dass die Gitterkonstante einer ersten Gruppe der Beugungsgitter wenigstens annähernd 0,7 μm, die Gitterkonstante einer zweiten Gruppe der Beugungsgitter wenigstens annähernd 1,2 μm und die Gitterkonstante einer dritten Gruppe der Beugungsgitter wenigstens annähernd 2,2 μm beträgt.

11. Verfahren zur Herstellung eines Dokumentes nach Anspruch 1, bei dem durch Belichten eines lichtempfindlichen Substrates mittels eines Lasers durch Interferenz von Lichtstrahlen eine als Vorlage zur Vervielfältigung dienende Original-Beugungsstruktur erzeugt wird, dadurch gekennzeichnet, dass der Strahlengang zwischen dem Laser und dem lichtempfindlichen Substrat (17) durch mindestens zwei hintereinander angeordnete bewegbare Lichtblenden (14; 16) begrenzt wird, dass durch eine Bewegung der ersten Lichtblende (14) kontinuierlich neue Spatialfrequenzen erzeugt und vorhandene Spatialfrequenzen ausgeblendet werden und dass durch eine Bewegung der zweiten Lichtblende (16) entlang einer vorbestimmten Bahn ($B_i$) ein zusammenhängendes Interferenzmuster erzeugt wird, dessen Spatialfrequenz entlang der Bahn nach Betrag und Orientierung kontinuierlich variiert.

## Claims

1. A document comprising a substrate and an optical-diffraction security element which covers at least a portion of the surface of the substrate and

which has a diffraction structure which, by diffraction of incident light, produces at least one colour pattern which represents a visually detectable authenticity feature characterised in that the diffraction structure (4) is of such a kind that the colour pattern (10) which occurs with a given illumination and viewing direction (7; 9) moves along a predetermined path (Bi), at locally predetermined speed, with respect to a coordinate system (x, y) which is fixedly connected to the substrate (2), when the substrate (2) is rotated in its plane in a given direction of rotation and at a given speed.

2. A document according to claim 1 characterised in that the diffraction structure (4) is of such a kind that at least one colour pattern (10) is produced in the situation of a perpendicular viewing direction (8), with any direction (7) of illumination.

3. A document according to claim 1 characterised in that the diffraction structure (4) is of such a kind that at least one colour pattern (10) is produced with any illumination and viewing direction (7; 9).

4. A document according to claim 1 characterised in that the optical-diffraction orientation of the diffraction structure (4) varies along the path of movement (Bi) in accordance with a predetermined law.

5. A document according to claim 1 characterised in that the spatial frequency of the diffraction structure (4) varies along the path of movement (Bi) in accordance with a predetermined law.

6. A document according to claim 4 or claim 5 characterised in that the diffraction structure (4) comprises a multiplicity of mutually adjoining structure elements (S) of different optical-diffraction orientation or different spatial frequency.

7. A document according to claim 4 or claim 5 characterised in that the optical-diffraction orientation or the spatial frequency of the diffraction structure (4) varies continuously along the path of movement (Bi).

8. A document according to claim 2 characterised in that the diffraction structure (4) has at least three different spatial frequencies.

9. A document according to claim 8 characterised in that the lowest spatial frequency is at least approximately 460 lines/mm and the highest spatial frequency is at least approximately 1400 lines/mm.

10. A document according to claim 6 and claim 8 characterised in that the structure elements (S) are diffraction gratings and that the grating constant of a first group of the diffraction gratings is at least approximately 0.7 μm, the grating constant of a second group of the diffraction gratings is at least approximately 1.2 μm and the grating constant of a third group of the diffraction gratings is at least approximately 2.2 μm.

11. A process for producing a document according to claim 1 wherein an original diffraction structure which serves as an original for reproduction purposes is produced by irradiating a photosensitive substrate by means of a laser by interference of light beams characterised in that the beam path between the laser and the photosensitive substrate (17) is delimited by at least two movable light stops (14; 16) which are disposed one behind the other, that a movement of the first light stop (14) continuously produces new spatial frequencies and masks out existing spatial frequencies and that a movement of the second light stop (16) along a predetermined path (Bi) produces a coherent interference pattern whose spatial frequency continuously varies along the path, in respect of magnitude and orientation.

**Revendications**

1. Document avec un substrat et un élément de sécurité diffringent, occupant une partie au moins de la surface du substrat et comportant une structure diffringente qui, par diffraction de la lumière incidente, produit au moins une configuration colorée qui constitue une caractéristique d'authenticité contrôlable visuellement, ledit document étant caractérisé en ce que la structure diffringente (4) est telle que la configuration colorée (10) produite pour des directions d'éclairage et d'examen données (7; 9) se déplace par rapport à un système de coordonnées (x, y) solidaire du substrat (2), le long d'une trajectoire (Bi) prédéterminée et à une vitesse localement prédéterminée quand le substrat (2) est tourné dans son plan dans un sens de rotation donné et à une vitesse donnée.

2. Document selon revendication 1, caractérisé en ce que la structure diffringente (4) est telle qu'une configuration colorée (10) au moins est produite dans le cas d'une direction d'examen (9) verticale et pour une direction d'éclairage (7) quelconque.

3. Document selon revendication 1, caractérisé en ce que la structure diffringente (4) est telle qu'une configuration colorée (10) au moins est produite pour une direction d'éclairage (7) et une direction d'examen (9) quelconques.

4. Document selon revendication 1, caractérisé en ce que l'orientation par diffraction de la structure diffringente (4) le long de la trajectoire (Bi) varie selon une loi prédéterminée.

5. Document selon revendication 1, caractérisé en ce que la fréquence spatiale de la structure diffringente (4) varie le long de la trajectoire (Bi) selon une loi prédéterminée.

6. Document selon une des revendications 4 ou 5, caractérisé en ce que la structure diffringente (4) est constituée par de nombreux éléments structurels (S) juxtaposés, d'orientation par diffraction ou de fréquence spatiale différente.

7. Document selon une des revendications 4 ou 5, caractérisée en ce que l'orientation par diffraction ou la fréquence spatiale de la structure diffringente (4) varie continûment le long de la trajectoire (Bi).

8. Document selon revendication 2, caractérisé en ce que la structure diffringente (4) présente trois fréquences spatiales différentes au moins.

9. Document selon revendication 8, caractérisé en ce que la fréquence spatiale minimale est d'environ 460 traits/mm au moins et la fréquence spatiale maximale d'environ 1 400 traits/mm au moins.

10. Document selon revendications 6 et 8, caractérisé en ce que les éléments structurels (S) sont des réseaux de diffraction; et la constante réticulaire d'un premier groupe de réseaux de diffraction est d'environ 0,7 μm au moins, la constante réticulaire d'un second groupe est d'environ 1,2 μm au moins et la constante réticulaire d'un troisième groupe d'environ 2,2 μm au moins.

11. Procédé pour la production d'un document selon revendication 1, dans lequel une structure diffringente originale servant de modèle pour la reproduction est produite par insolation d'un substrat photosensible à l'aide d'un laser et interférence de faisceaux lumineux, ledit procédé étant caractérisé en ce que le trajet des rayons entre le laser et le substrat photosensible (17) est limité par au moins deux diaphragmes (14; 16) mobiles disposés côte à côte; un mouvement du premier diaphragme (14) produit continûment de nouvelles fréquences spatiales et élimine les fréquences spatiales existantes; et un mouvement du second diaphragme (16) le long d'une trajectoire ($B_i$) prédéterminée produit une configuration interférentielle continue, dont la fréquence spatiale varie continûment en amplitude et orientation le long de la trajectoire.

**Fig. 1**

**Fig. 2**

**Fig. 4**

**Fig. 3**

0 105 099

Fig. 5

Fig. 6

Fig. 7

11